Europäisches Patentamt

European Patent Office

Office européen des brevets

(19)

(11) **EP 1 239 476 A2**

(12) **EUROPEAN PATENT APPLICATION**

(43) Date of publication:
**11.09.2002 Bulletin 2002/37**

(51) Int Cl.⁷: **G11B 20/12**, G11B 20/10, G11B 20/00, G11B 27/10, G11B 27/32, H04N 5/85, H04N 5/92

(21) Application number: **02004354.3**

(22) Date of filing: **04.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **05.03.2001 JP 2001059598**<br><br>(71) Applicant: **MATSUSHITA ELECTRIC INDUSTRIAL CO., LTD.**<br>**Kadoma-shi, Osaka 571-8501 (JP)** | (72) Inventors:<br>• **Fukuda, Hideki**<br>  **Nara-shi, Nara 631-0843 (JP)**<br>• **Saeki, Shinichi**<br>  **Sakai-shi, Osaka 590-0973 (JP)**<br>• **Ide, Hirofumi**<br>  **Amagasaki-shi, Hyogo 661-0971 (JP)**<br><br>(74) Representative: **Holmes, Miles Keeton et al**<br>**Novagraaf International SA**<br>**25, Avenue du Pailly**<br>**1220 Les Avanchets - Geneva (CH)** |

(54) **Recording apparatus and method for recording audio/video signals**

(57)    The present invention provides a recording apparatus that records audio/video signals in real time in a recording format facilitating high-speed search. A compressed stream (VOB) generated by an audio/video encoder 101 is stored in a recording buffer memory 102.

When data of one VOB is stored in the recording buffer memory 102, a navigation pack is generated from attribute information of VOBUs constituting the VOB, the generated navigation pack is inserted at the head of each VOBU, and then the data is recorded on a recording medium 106.

## Fig.1

EP 1 239 476 A2

**Description**

FIELD OF THE INVENTION

The present invention relates to a recording method and apparatus and, more particularly, to a recording method and apparatus for recording audio/video signals on recording media.

BACKGROUND OF THE INVENTION

Specifications for recording audio/video signals on a DVD (Digital Versatile Disk): "DVD Specifications for Read-Only Disc Part 3 VIDEO SPECIFICATIONS Version 1.0" was issued in August 1996, and then Version 1.1 was issued in December 1997 (hereinafter, abbreviated as "DVD video specifications"). The DVD video specifications define that video signals are compressively coded according to an MPEG coding method of ISO/IEC 13818-2 (MPEG2 video) or ISO/IEC 11172-2 (MPEG1 video).

The MPEG coding method is a coding method by which, as a picture data coding process, an intra-frame coding process of coding picture data utilizing intra-frame correlation of pixel values, and an inter-frame coding process of coding picture data utilizing inter-frame correlation of pixel values are adaptively switched and carried out. According to this MPEG coding method, the coding of picture data is performed with coding data corresponding to plural sequential frames being taken as a unit. A picture that is composed of plural sequential frames is called a Group of Picture (GOP). More specifically, in this MPEG coding method, the intra-frame coding process is carried out for picture data corresponding to at least one of the plural frames constituting this GOP, and the inter-frame coding process is carried out for picture data corresponding to remaining frames.

The inter-frame coding process has two kinds of processes: a forward prediction inter-frame coding process and a bidirectional prediction inter-frame coding process. A frame to which the forward prediction inter-frame coding is performed is referred to as P frame. A frame to which the bidirectional prediction inter-frame coding is performed is referred to as B frame. Picture data of P frame is predictively coded with reference to picture data of a frame (reference frame) that is situated forward the P frame. Picture data of B frame is predictively coded with reference to picture data of two frames (reference frames) which are situated in proximity and forward and backward of the B frame. Usually, in the coding process for P frame, I frame that is in proximity of the P frame is used as the reference frame. In the coding process for B frame, I frame and P frame or two P frames, which are in proximity of the B frame, are used as reference frames.

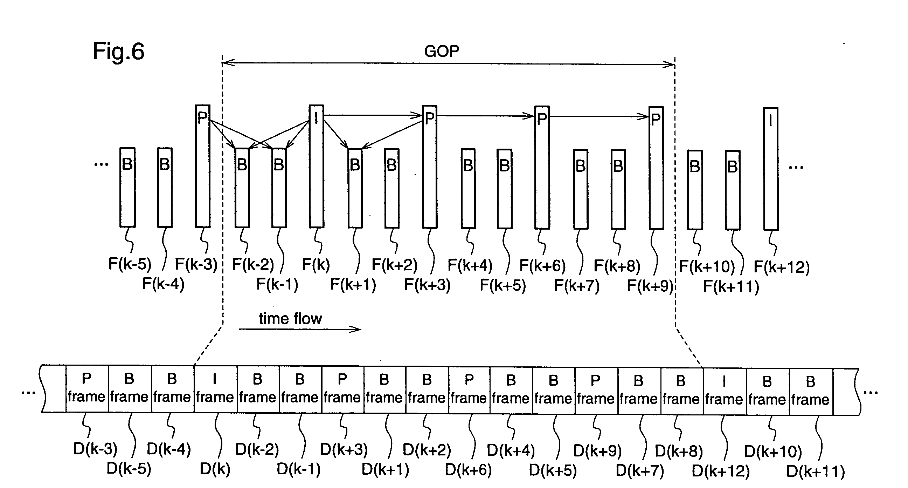

Figure 6 is a diagram for explaining a structure of a GOP, and this figure shows plural sequential frames F(k-5)~F(k+12) in contrast with coded data D(k-5)~D(k+12) corresponding to the respective frames. Here, k denotes an arbitrary integer. Figure 6 shows an example in which one GOP is constituted by 12 frames: B frame F(k-2) to P frame (k+9). For example, for P frame F(k+3), the inter-frame prediction coding process is carried out with I frame F(k) as the reference frame. For P frame F(k+6), the inter-frame prediction coding process is carried out with P frame F(k+3) as the reference frame. Further, for B frames F(k+1) and F(k+2), the inter-frame prediction coding process is carried out with I frame F(k) and P frame F(k+3) as the reference frames.

For coded data corresponding to the respective frames obtained by the above-mentioned coding process, a process for changing the arrangement of the coded data from an arrangement in which the respective frame pictures are arranged in the order of display to an arrangement in which the respective frames are arranged in the order of decoding (arrangement changing process) is carried out. This is performed to reduce the amount of memory that is used at the decoding process. For example, when the arrangement changing process is carried out for coded data corresponding to the GOP, as the coded data which are obtained by the changing process, coded data D(k) of I frame F(k) is placed at the top of the coded data corresponding to the GOP, and the coded data D(k) is successively followed by coded data D(k-2) of B frame F(k-2), coded data D(k-1) of B frame F(k-1), and coded data D(k+3) of P frame F(k+3), as shown in figure 6. Then, the coded data corresponding to the GOP are recorded on a recording medium in the order that is obtained by the arrangement changing process.

As the MPEG coding method, there are a fixed-rate coding method by which video signals are compressively coded at a fixed data rate, and a variable-rate coding method by which video signals are compressively coded at variable data rates depending on various scenes of the video signals. Usually, video scenes having greater difficulty in compressive coding and video scenes having smaller difficulty are mixed in the video signal. Examples of the scenes which have greater difficulty in coding are scenes including many complicated patterns, scenes including many patterns moving complicatedly, scenes having large amounts of motion, and the like. On the other hand, examples of the scenes having smaller difficulty in coding are scenes having many simple patterns, scenes having small amounts of motion, and the like.

The variable-rate coding method is a coding method that is characterized in that a large amount of information is allocated to scenes having greater difficulty in coding, thereby reducing coding distortion, while allocating a reduced amount of information to scenes having smaller difficulty in coding. According to this coding method, bit distribution can be performed efficiently and the average coding rate is reduced while keeping a higher image quality for all videos. When data is recorded on a storage medium such as a DVD, the recording of data is performed intermittently, thereby enabling the data which has been compressively coded by the variable-rate coding method to be handled. According to the DVD video specifications, the variable-rate coding method is often adopted to realize recording of video signals of a higher image quality.

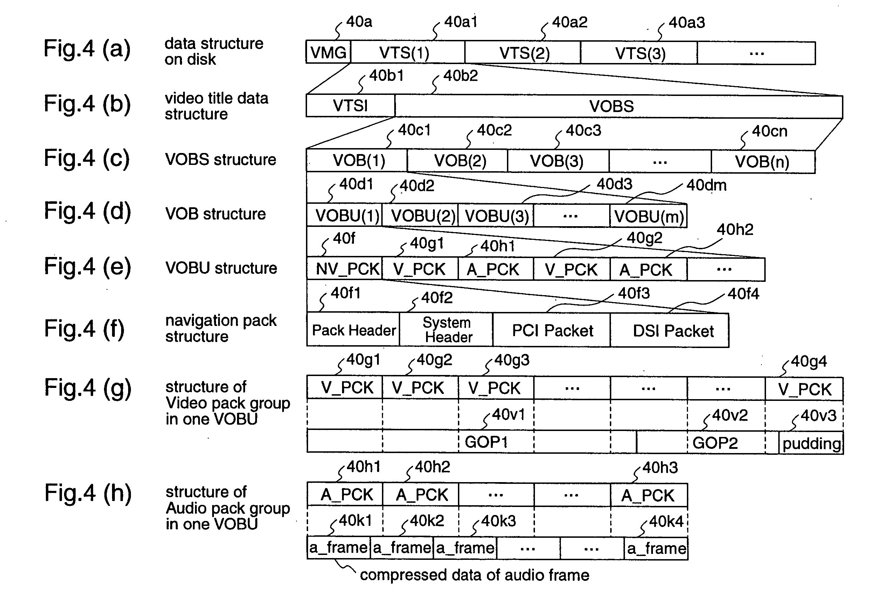

A data structure according to the DVD video specifications will be described with reference to figures 4(a) to 4(h). Figures 4 are diagrams illustrating the data structure according to the DVD video specifications. Figure 4(a) shows a structure of data recorded on a disk, which is, according to the DVD video specifications, constituted by video manager information (VMG 40a) and a video title set as an aggregate of video titles (VTSs). Here, the video titles are referred to as VTS(1) 40a1, VTS(2) 40a2, VTS(3) 40a3, ..., respectively. The VMG 40a is a table indicating contents of the video title set, on which control data that is required for playback of the VTSs is recorded. Figure 4(b) shows the structure of the VTS(1) 40a1. The VTS(1) 40a1 is constituted by video title set information (VTSI 40b1) and a video object set (VOBS 40b2). The VTSI 40b1 contains control information that is required for playback of this VTS. The VOBS 40b2 is an aggregate of video objects (VOB) which are composed of data such as video, audio and sub-pictures.

Figure 4(c) shows the structure of the VOBS 40b2. The VOBS 40b2 consists of plural VOBs. It is assumed here that the VOBS 40b2 consists of n pieces of VOBs, i.e., VOB(1) 40c1, VOB(2) 40c2, VOB(3) 40c3, ..., and VOB(n) 40cn.

Figure 4 (d) shows the structure of the VOB(1) 40c1. As shown in figure 4(d), the VOB(1) 40c1 is constituted by plural video object units (VOBUs). It is assumed here that the VOB(1) is constituted by m pieces of VOBUs, i.e., VOBU(1) 40d1, VOBU(2) 40d2, VOBU (3) 40d3, ..., and VOBU (m) 40dm. The DVD video specifications define that the VOB is constituted by one or more cells and that the cell is constituted by one or more VOBUs, but to simplify the descriptions, it is assumed hereinafter that one VOB is constituted by one cell and no description will be given of the cell.

Figure 4(e) shows the structure of the VOBU (1) 40d1. The VOBU(1) 40d1 is constituted by packs of a predetermined size. The DVD video specifications define the pack size as 2048 bytes. The VOBU(1) 40d1 is constituted by a navigation pack (NV_PCK 40f), video packs (V_PCK 40g1, V_PCK 40g2, ...), audio packs (A_PCK 40h1, A_PCK 40h2, ...), and sub-picture packs. In figure 4(e), the sub-picture packs are not shown.

The navigation pack (NV_PCK) is placed at the head of each VOBU. In this navigation pack (NV_PCK), playback information of this VOBU and management information relating to search information is recorded. According to the DVD video specifications, it is defined that the VOBU has a video playback time of 0.4 sec-1 sec. However, as for a VOBU that is at the end of a VOB, it is defined that its playback time is 0.4 sec-1.2 sec. Here, the data is recorded with being packed and packeted in compliance with "The system part of the MPEG-2 standard (ISO/IEC 13818-1)". In the following descriptions, a method that is compliant with "The system part of the MPEG-2 standard (ISO/IEC 13818-1)" is referred to as an MPEG system coding method.

Figure 4(g) shows the correspondence between the video packs 40g1, 40g2, ..., 40g4 among the packs constituting the VOBU(1) 40d1, and a stream of GOPs.

Generally a VOBU can be constituted by data of one or more GOPs, while a description will be given here of a case where the VOBU(1) 40d1 is constituted by a video stream corresponding to two GOPs. To be more specific, the video stream included in the VOBU (1) 40d1 is constituted by coded data 40v1 of GOP(1), coded data 40v2 of GOP(2), and pudding data 40v3. Since each VOBU is constituted by video packs and audio packs each comprising 2048 bytes, the data size of the VOBU is required to be an integral multiple of 2048 bytes. The pudding data 40v3 is added to the video stream corresponding to one GOP, so that the data size of the video stream included in the VOBU is matched with an integral multiple of 2048 bytes.

Figure 4(h) shows the correspondence between the audio packs 40h1~40h3 among the packs constituting the VOBU(1) 40d1, and a stream of respective audio frames. The audio packs (A_PCK) 40h1~40h3 which are obtained by packing coded data of audio frames 40k1~40k4 correspond to the audio stream included in the VOBU(1) 40d1. In figure 4(h), each data size of the audio frames 40k1~40k4 is an integral multiple of 2048 bytes, but the data size is not restricted to this. According to the DVD video specifications, it is required that audio frames should be completed in one VOB, while it is unnecessary that audio frames should be completed in one VOBU, and coded data of audio frames may be divided by boundaries of VOBUs. However, as for the last VOBU in the VOB, it is required to adjust the data size such that the end of the audio frame matches the last audio pack of the VOBU, and thus the pudding data is inserted.

Figure 4(f) shows a structure of the navigation pack (NV_PCK 40f). The NV_PCK 40f is constituted by a pack header 40f1, a system header 40f2, a PCI packet 40f3 in which playback information is described, and a DSI packet 40f4 in which data search information is described. The pack header 40f1 is constituted by an identification code (Pack_start_code) for identifying the head of the pack, time information indicating a timing at which data is inputted to a decoder (System Clock Reference : SCR), and a data transfer rate of a compressed stream (program_mux_rate).

The system header 40f2 contains the number of audio streams and the number of video streams, included in the VOBU, and the decoder buffer memory size required at the decoding, and the like.

The PCI packet 40f3 contains playback control information of the VOBU. Examples of the VOBU playback control information are a leading recording address of a VOBU, (NV_PCK_LBN), playback start time information of a VOBU (VOBU_S_PTM), playback end time information of a VOBU (VOBU_E_PTM), and the like.

Further, the DSI packet 40f4 contains management information for searching a VOBU. As the management information, there are addresses of reference frames included in a VOBU (VOBU_1STREF_EA, VOBU_2NDREF_EA, VOBU_3RDREF_EA), playback start time information (VOB_S_PTM) and playback end time information (VOB_E_PTM) of a VOB including the current VOBU, address information (FWDI, BWDI) of plural VOBUs which are located temporally forward and backward the current VOBU, and the like. As the FWDI and the BWDI, addresses of the first packs in VOBUs which are located within two minutes before and after the current VOBU, in a VOB including the current VOBU are described. Here, the FWDI is used when high-speed forward playback is performed, and the BWDI is used when high-speed backward playback is performed.

As described above, according to the DVD video specifications, the playback control information of each VOBU can be recognized by reading the PCI packet information, and the information for data search can be recognized by reading the DSI packet information. Therefore, the playback control and the high-speed search can be realized only by reading data streams, whereby the cost of a playback apparatus can be reduced without the need of storing search information in a memory or the like. Thus, the DVD video specifications are recording formats which facilitate high-speed data search even with less-expensive playback apparatus.

In figure 4(b), only the structure of the VTS(1) 40a1 is shown in detail, but the VTSs other than the VTS (1) 40a1, i.e., the VTS(2) 40a2 and the VTS(3) 40a3 also have the same structure as the VTS(1) 40a1, respectively. In figure 4(d), only the structure of the VOB(1) 40c1 is shown in detail, but the VOBs other than the VOB(1) 40c1, i.e., the VOB(2) 40c2 to VOB(n) 40cn have also the same structure as the VOB(1) 40c1, respectively. Further, in figure 4(e), only the structure of the VOBU(1) 40d1 is shown in detail, but the VOBUs other then the VOBU(1) 40d1, i.e., the VOBU(2) 40d2 to VOBU(m) 40dm also have the same structure as the VOBU(1) 40d1, respectively.

The navigation pack is placed at the head of the VOBU, while the playback end time information of the VOBU stored in the PCI packet cannot be decided until the number of video frames included in the VOBU (GOP structure) is determined. Further, the search information stored in the DSI packet cannot be decided until the recording address of a VOBU which is two minutes ahead at maximum is determined. Further, the playback end time information of a VOB including the current VOBU cannot be decided until the VOB is determined. Therefore, when data are recorded in real time in compliance with the DVD video specifications, prior art recording methods and apparatus have following various problems.

Hereinafter, these problems will be described in detail. A prior art recording apparatus which forms VTSs according to the DVD video specifications (authoring system) previously creates a compressed stream of video data and audio data of a VTS to be recorded, decides a VOBU configuration included in the VTS, and thereafter analyzes the compressed stream in a separate process. From the analysis of the compressed stream, the playback end time information of each VOBU, the playback end time information of VOBs, and recording addresses of VOBUs located forward and backward of the current VOBU are detected, thereby creating data of a navigation pack.

Therefore, in order to record a compressed stream to which the navigation pack data has been inserted, a processing time taken to compressively code all audio/video signals of a VTS, a processing time taken to analyze an obtained compressed stream, a processing time taken to create a navigation pack, and a processing time taken to insert the navigation pack into the compressed stream are required. However, in consumer recording apparatus which receive television broadcasts and the like to record/playback the same, it is required to carry out the above-mentioned processes in real time. Therefore, the above-mentioned processing times cause problems.

Further, the same structure as the above-mentioned authoring system has a problem of requiring a memory or another recording medium having such a capacity that a compressed stream of one VTS is stored before analyzing the compressed stream, resulting in an increase in costs. This problem may be solved by fixing the data sizes of all VOBUs to a predetermined value. According to this solution, it is possible to calculate recording addresses of VOBUs which are situated forward and backward of a target VOBU as the VOBU search information, to be integral multiples of the predetermined fixed size. However, in order to fix the data sizes of the VOBUs, the fixed-rate coding method should be adopted and, in this case, the degradation in picture quality occurs more easily as compared to the variable-rate coding method.

The playback end time of a VOB included in the DSI packet cannot be decided until the VOB is determined. This problem can be solved for example by previously recording the end time of the VOB as a predetermined time, i.e., dividing the VOB periodically when the VTS is recorded. However, in this solution, even when the user instructs the recording apparatus to stop recording during the recording, the recording cannot be stopped till the predetermined end time of the VOB. Further, when the VTS is recorded with dividing the VOB periodically, since the DVD video specifications restrict the maximum number of VOBs, this maximum number of VOBs should be taken into consideration.

SUMMARY OF THE INVENTION

The present invention has for its object to provide a recording method and apparatus which can record audio/video signals on a recording medium in real time in a recording format that facilitates high-speed data search.

Another object of the present invention is to provide a recording method and apparatus which can compressively encode video signals of high picture quality by a variable-rate coding method and record the signals on a recording medium in real time in a recording format that facilitates high-speed data search.

Another object of the present invention is to provide a recording method and apparatus which includes a user interface that enables an instant stop of recording upon receipt of a recording stop notice by the user, as well as can record audio/video signals on a recording medium in real time in a recording format that facilitates high-speed data search.

Still another object of the present invention is to provide a recording method and apparatus which can record audio/video signals on a recording medium in real time in a recording format that is compliant with the DVD video specifications.

Other objects and advantages of the present invention will become apparent from the detailed description and specific embodiments described are provided only for illustration since various additions and modifications within the spirit and scope of the invention will be apparent to those of skill in the art from the detailed description.

According to a 1st aspect of the present invention, there is provided a recording apparatus for recording a compressed stream that is obtained by compressively coding audio/video signals, on a recording medium, including: an encoder for compressively coding the audio/video signals and outputting a compressed stream; a recording buffer memory for storing the compressed stream; a recorder for recording the compressed stream stored in the recording buffer memory, on the recording medium; and a system controller for controlling the respective units, and the encoder divides a compressed stream of audio/video signals within a predetermined time range to form plural sub-units and forms a main unit from a group of these sub-units to output the compressed stream as well as creates sub-unit attribute information concerning the sub-units, and the system controller generates management information for each of the sub-units from the corresponding sub-unit attribute information, and inserts the management information in a predetermined position in the main unit, and the recorder reads the compressed stream successively from the recording buffer memory when the sub-unit management information has been inserted into the main unit, and records the read stream on the recording medium. Therefore, a navigation pack including search information and playback control information of each sub-unit can be inserted into a compressed stream in real time, to be recorded on a recording medium. Accordingly, the audio/video signals can be recorded in real time on a recording medium of a recording format that is compliant with the DVD video specifications, as a recording format which facilitates high-speed data search.

According to a 2nd aspect of the present invention, in the recording apparatus of the 1st aspect, the encoder compressively encodes the audio/video signals by a variable-rate controlled compression method. Therefore, video signals of high picture quality and audio signals of high sound quality can be recorded on a recording medium of a limited capacity.

According to a 3rd aspect of the present invention, in the recording apparatus of the 1st aspect, the maximum number of the main units constituting the compressed stream is defined as a predetermined value N. Therefore, the upper limit of a main unit management table can be restricted, and the memory size for the management table and the main units can be easily managed.

According to a 4th aspect of the present invention, in the recording apparatus of the 3rd aspect, when the number of the main units constituting the compressed stream reaches the predetermined value N, the recording of the compressed stream is stopped. Therefore, the maximum number of main units to be recorded is limited to N, thereby restricting the upper limit of the main unit management table, and accordingly the memory size for the management table and the main units can be easily managed.

According to a 5th aspect of the present invention, in the recording apparatus of the 1st aspect, the system controller forms a main unit set from a group of the plural main units, and when the maximum value of the main units included in the main unit set is defined as a predetermined value n and the number of the main units constituting the compressed stream reaches the predetermined value n, the main unit set is formed from a group comprising the predetermined value n of the main units, then followed by starting formation of a next main unit set. Therefore, the maximum number of the main units within the main unit set is limited to N, thereby restricting the upper limit of a main unit management table, and accordingly the memory size for the management table and the main units can be easily managed.

According to a 6th aspect of the present invention, in the recording apparatus of the 3rd aspect, a memory size of the recording buffer memory is defined by a recording capacity of the recording medium and the predetermined value N. Therefore, the recording capacity of the recording medium can be utilized efficiently. Further, the memory size of the recording buffer memory is minimized, whereby the cost of the recording apparatus can be reduced.

According to a 7th aspect of the present invention, in the recording apparatus of the 3rd aspect, a memory size of the recording buffer memory is defined by a size of data to be recorded and the predetermined value N. Therefore, the data can be recorded with reliability. Further, the memory size of the recording buffer memory is minimized, whereby the cost of the recording apparatus can be reduced.

According to an 8th aspect of the present invention, in the recording apparatus of the 1st aspect, the encoder forms the main unit from the sub-unit group when a total data size of the sub-unit group becomes equal to or larger than a predetermined value M. Therefore, the data sizes of the main units can be made an almost uniform value, i.e., the predetermined value M, whereby the memory size of the recording buffer memory can be properly decided on the basis of the predetermined value M.

According to a 9th aspect of the present invention, in the recording apparatus of the 8th aspect, the predetermined value M is defined by a memory size of the recording buffer memory. Therefore, when the predetermined value M is decided so that at least one main unit can be stored in the recording buffer memory, navigation data of each sub-unit can be inserted into the recording buffer memory, whereby the audio/video signals can be recorded on a recording medium in a recording format that facilitates high-speed data search.

According to a 10th aspect of the present invention, in the recording apparatus of the 8th aspect, the maximum number of the main units constituting the compressed stream is set at a predetermined value N, and the predetermined value M is defined by a recording capacity of the recording medium and the predetermined value N. Therefore, the predetermined value M for efficiently using the recording capacity of the recording medium can be decided. Further, the memory size of the recording buffer memory decided by the predetermined value M can be minimized, whereby the cost of the recording apparatus can be reduced.

According to an 11th aspect of the present invention, in the recording apparatus of the 8th aspect, the maximum number of the main units constituting the compressed stream is set at a predetermined value N, and the predetermined value M is defined by a size of data to be recorded and the predetermined value N. Therefore, the predetermined value M for recording data of a predetermined data size can be decided, and the memory size of the recording buffer memory decided by the predetermined value M can be minimized, whereby the cost of the recording apparatus can be reduced.

According to a 12th aspect of the present invention, in the recording apparatus of the 1st aspect, the encoder detects at least one information among information concerning a data size of the sub-unit, information concerning a position of the sub-unit in the main unit, and information concerning a playback time of the sub-unit, as the sub-unit attribute information. Therefore, search information and playback control information as sub-unit management information can be generated by the system controller.

According to a 13th aspect of the present invention, in the recording apparatus of the 1st aspect, the system controller inserts the sub-unit management information into the main unit so as to be placed at a head of each sub-unit. Therefore, reading of navigation data as the sub-unit management information can be performed simultaneously with the reading of sub-unit data, whereby the compressed stream can be recorded in a recording format enabling the search information and the playback control information to be easily recognized.

According to a 14th aspect of the present invention, the recording apparatus of the 1st aspect comprises a unit for issuing a recording stop command or a recording start command, the system controller posts a coding stop instruction to the encoder when the recording stop command is issued, and the encoder finishes forming the main unit when receiving the coding stop instruction, taking a sub-unit that is being formed at a time when the instruction is received as a last sub-unit. Therefore, the recording of the compressed stream can be stopped at an arbitrary timing.

According to a 15th aspect of the present invention, the recording apparatus of the 1st aspect comprises a decision unit for deciding the type of the recording medium, and the system controller selects either inserting the sub-unit management information in a predetermined position in the main unit on the basis of a result of the decision by the decision unit, or controlling the recorder for recording the sub-unit management information in a sub-unit management area on the recording medium. Therefore, the audio/video signals can be recorded in a recording format according to the type of the recording medium.

According to a 16th aspect of the present invention, there is provided a recording method by which a compressed stream that is obtained by compressively coding audio/video signals is recorded on a recording medium, comprising: a coding step of compressively coding the audio/video signals, thereby generating a compressed stream; a storage step of storing the compressed stream; a recording step of recording the compressed stream stored in the storage step on the recording medium; and a system control step of controlling the respective steps, in which, in the coding step, a compressed stream of audio/video signals within a predetermined time range is divided to form plural sub-units, and a main unit is formed from a group of the sub-units as well as sub-unit attribute information concerning the sub-unit is created, in the system control step, management information of each of the sub-units is generated from the corresponding sub-unit attribute information, and each of the management information is inserted in a predetermined position in the main unit, and in the recording step, the compressed stream in which the sub-unit management has been inserted is successively recorded on the recording medium. Therefore, a navigation pack including search information and playback control information of each sub-unit can be inserted into a compressed stream in real time, to be recorded on the recording medium. Accordingly, the audio/video signals can be recorded in real time on a recording medium of a recording format that is compliant with the DVD video specifications, as a recording format which facilitates high-speed data search.

BRIEF DESCRIPTION OF THE DRAWINGS

Figure 1 is a block diagram illustrating a structure of a recording apparatus according to a first embodiment of the present invention.
Figure 2 is a block diagram illustrating a structure of an audio/video encoder 101 of the recording apparatus according to the first embodiment.
Figure 3 is a diagram for explaining an operation of a system controller 105 of the recording apparatus according to the first embodiment, concerning a navigation pack insertion process.
Figure 4(a) is a diagram illustrating a structure of data on a disk when an audio/video stream is recorded on a recording medium. Figure 4(b) is a diagram illustrating a data structure of a video title. Figure 4(c) is a diagram illustrating a data structure of a video object set. Figure 4(d) is a diagram illustrating a data structure of a video object. Figure 4(e) is a diagram illustrating a data structure of a video object unit. Figure 4(f) is a diagram illustrating a data structure of a navigation pack. Figure 4(g) is a diagram illustrating video packs constituting a video object. Figure 4(h) is a diagram illustrating audio packs constituting a video object.
Figure 5 is a schematic diagram for explaining an operation of a video coding unit 202 of the recording apparatus according to the first embodiment, showing plural frames constituting one GOP, timing of notification of a stop command, and timing when the video coding unit 202 stops coding.
Figure 6 is a schematic view for explaining the operation of the video coding unit 202 according to the first embodiment, showing plural frames constituting one GOP.

DETAILED DESCRIPTION OF THE PREFERRED EMBODIMENTS

Hereinafter, an embodiment of the present invention will be described.

[Embodiment 1]

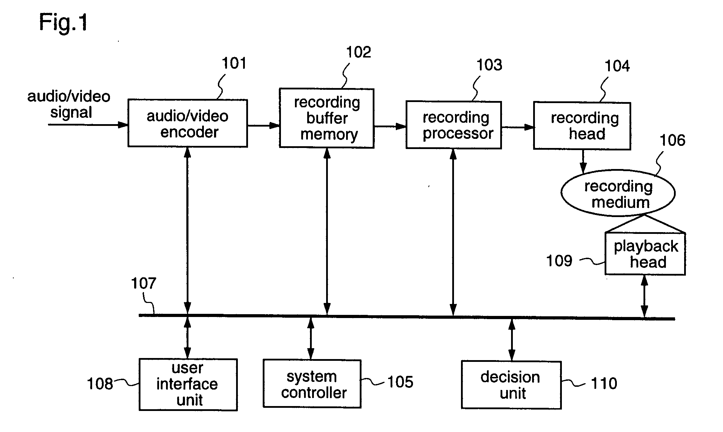

Figure 1 is a block diagram for explaining a recording apparatus according to the first embodiment of the present invention. The recording apparatus according to the first embodiment is a recording apparatus which comprises an audio/video encoder 101, a recording buffer memory 102, a recording processor 103, a recording head 104, a system bus 107, a user interface unit 108, a playback head 109, a decision unit 110, and a system controller 105 for controlling the respective constituents, and records inputted audio/video signals on a recording medium 106. The decision unit 110 is a means for deciding the type of the recording medium 106 on the basis of information read by the playback head 109. In this first embodiment, a description will be given of the operation of the recording apparatus in a case where the decision unit 110 decides that the recording medium 106 is a recording medium that is compliant with the DVD video specifications. Here, the decision unit 110 decides the type of the recording medium 106 on the basis of information that is read from an inner radius of the recording medium 106 by the playback head 109 for deciding the type of the recording medium. The decision unit 110 may decide the type of the recording medium 106 on the basis of the amount of reflected light that is obtained when the playback head 106 irradiates the recording medium 106 with a laser (reflection ratio). The recording medium can be decided by this method because the recording medium 106 has different physical properties according to the types.

The audio/video encoder 101 encodes inputted audio/video signals. This encoding process generates a compressed stream having a sub-unit configuration and a main unit configuration which are compliant with the DVD video specifications, and outputs the same. The audio/video encoder 101 divides the compressed stream into plural sub-units, and constitutes a main unit by a group of these sub-units.

Here, the description will be given assuming that the sub-unit corresponds to a VOBU, the main unit corresponds to a VOB, and a main unit set that is constituted by a group of the main units corresponds to a VTS in the recording apparatus of the first embodiment. More specifically, the audio/video encoder 101 divides the compressed stream to form plural VOBUs, and forms a VOB from a group of these VOBUs. Here, one VOB is completed at a time when the total data size of a group of VOBUs constituting the VOB exceeds a predetermined threshold M, and then a new VOB is started from the following VOBU. That is, the data size of the VOB is made almost equal to the threshold M. It is assumed that the threshold M is smaller than the capacity B of the recording buffer memory 102. This is because it is required to store data of at least one VOB in the recording buffer memory 102. The threshold M is a value that is defined by the system controller 105 and sent from the system controller 105 to the audio/video encoder 101. The way to obtain the threshold M will be described later.

Further, the audio/video encoder 101 extracts attribute information concerning each VOBU, and posts the information to the system controller 150. The system controller 105 stores the VOBU attribute information. Further, the audio/video encoder 101 gives a last VOBU notice to the system controller 105. This is because the system controller 105 should specify the last VOBU in a VOB.

The recording buffer memory 102 has a memory of a predetermined memory size, and retains compressed streams. When one VOB is stored in the recording buffer memory 102, the system controller 105 generates PCI data and DSI data as navigation data, from attribute information of respective VOBUs constituting the stored VOB, to form a navigation pack. The system controller 105 recognizes that one VOB has been stored in the recording buffer memory 102 upon receipt of the notice of the last VOBU in the VOB from the audio/video encoder 101. Then, after the navigation pack is inserted at the top of each VOBU stored in the recording buffer memory 102, the system controller 105 controls the compressed streams in which the navigation packs have been inserted, for being successively inputted to the recording processor 103.

The recording processor 103 carries out an error correction code addition process and a recording modulation process for the compressed stream in which the navigation pack has been inserted, and outputs a record signal. The recording head 104 records the record signal on the recording medium 106 . The user interface unit 108 is a means for issuing a recording start command or a recording stop command by the user. The system controller 105 performs control of the respective constituents, including the above-mentioned operation, and communicates with the respective constituents via the system bus 107.

Here, the VOBU attribute information outputted by the audio/video encoder 101 is described. The VOBU attribute information is information that is required to generate navigation data. The navigation pack includes information that is required for multi-angle playback as a recording form of the DVD video specifications, button highlight information on a menu screen, information concerning sub-pictures, and the like. In this first embodiment, the description will be given only of information for recording or playing back a series of sequential VTSs. Here, as for the angle information, highlight information, sub-picture information and the like, predetermined default values which are defined in the DVD video specifications can be recorded, and accordingly they will not be described here.

Examples of the VOBU attribute information detected by the audio/video encoder 101 are shown below.

(1) nv_pck_scr : system clock reference information of a navigation pack. This is obtained when respective coded data of video and audio are multiplexed to form a VOBU, by reading out system clock reference information of a pack that is situated at the top of a VOBU.

(2) vobu_ea : the number of packs in a VOBU. This is obtained by counting the number of packs included in a VOBU.

(3) vobu_s_ptm : playback start time information of a playback top video frame in a VOBU. When a GOP at the top of the VOBU has for example the structure as shown in figure 6, the playback top video frame corresponds to B frame F(k-2) at the tope of the GOP.

(4) vobu_frame : the number of frames in a VOBU. This is obtained by counting the number of frames included in a VOBU.

(5) vobu_1stref_ea : the number of packs from the head of a VOBU to a pack including the end of the top reference frame in this VOBU. When the structure of the GOP at the head of the VOBU has for example the structure as shown in figure 6, I frame F(k) at the head of the GOP corresponds to the top reference frame.

(6) vobu_2ndref_ea : the number of packs from the head of a VOBU to a pack including the end of a second reference frame in this VOBU. When a GOP at the top of the VOBU has for example the structure as shown in figure 6, P frame F(k+3) as a P frame occurring first in the GOP corresponds to the second reference frame.

(7) vobu_3rdref_ea : the number of packs from the head of a VOBU to a pack including the end of a third reference frame in this VOBU. When a GOP at the top of the VOBU has for example the structure as shown in figure 6, P frame F(k+6) as a secondly occurring P frame in the GOP corresponds to the third reference frame.

(8) a_synca : positional information of an audio pack which is played back in synchronization with the playback top video frame in the current VOBU. When a GOP at the top of the VOBU has for example the structure as shown in figure 6, B frame F(k-2) at the top of the GOP corresponds to the playback top video frame.

Examples of parameters of a navigation pack generated by the system controller 105 when a series of VTSs are recorded or played back are shown below. These parameters can be generated using the above-mentioned VOBU attribute information.

(1) NV_PCK_SCR : system clock reference information of a navigation pack. This is the same as nv_pck_scr of the VOBU attribute information.

(2) NV_PCK_LBN : positional information of the head of a VOBU with respect to the head of a VOB. This is obtained by cumulatively adding the numbers of VOBU packs (vobu_ea) in the past VOBU attribute information, from the top of the VOB.

(3) VOBU_S_PTM : video playback start time information of a VOBU. This is the same as vobu_s_ptm of the VOBU attribute information.

(4) VOBU_E_PTM : video playback end time information of a VOBU. This is obtained by adding vobu_s_ptm of the VOBU attribute information, and a value that is obtained by converting the number of VOBU frames (vobu_frame) into time information.

(5) VOBU_EA : VOBU size (the number of packs). This is the same as vobu_ea of the VOBU attribute information.

(6) VOBU_1STREF_EA : This is the same as vobu_1stref_ea of the VOBU attribute information.

(7) VOBU_2NDREF_EA : This is the same as vobu_2ndref_ea of the VOBU attribute information.

(8) VOBU_3RDREF_EA : This is the same as vobu_3rdref_ea of the VOBU attribute information.

(9) VOB_V_S_PTM : video playback start time information of a VOB including the current VOBU. This is the same as vobu_s_ptm of the first VOBU in the VOB.

(10) VOB_V_E_PTM : video playback end time information of a VOB including the current VOBU. This is the same as vobu_e_ptm of the last VOBU in the VOB.

(11) FWDI : forward search information. This is positional information of each VOBU that is situated within two minutes ahead at maximum in a VOB including the current VOBU. This is obtained from NV_PCK_LBN of all VOBUs included in the VOB.

(12) BWDI : backward search information. This is positional information of each VOBU that is situated within two minutes behind at maximum in a VOB including the current VOBU. This is obtained from NV_PCK_LBN of all VOBUs included in the VOB.

(13) A_SYNCA : This is the same as a_syncha of the VOBU attribute information.

(14) VOBU_VOB_IDN : a serial number of a VOB from the head of a VTS. This is obtained by counting the number of VOBs generated by the audio/video encoder 101 from the start of recording.

Among the parameters of the navigation data, NV_PCK_SCR, NV_PCK_LBN, VOBU_S_PTM, VOB_S_PTM and BWDI can be obtained at a time when a VOBU is formed by the audio/video encoder 101. This is because the audio/video encoder 101 can obtain these parameters by storing the numbers of packs and playback time information of past VOBUs. Also, VOBU_VOB_IDN can be obtained by the audio/video encoder 101. This is because VOBU_VOB_IDN can be obtained by counting the numbers of VOBs formed by the audio/video encoder 101 from the start of the recording.

Further, VOBU_E_PTM, VOBU_EA, VOBU_1STREF_EA, VOBU_2NDREF_EA and VOBU_3RDREF_EA can be generated by the audio/video encoder 101 by including a memory for storing data of one VOBU in the audio/video encoder 101, and delaying a compressed stream output by one VOBU. This is because these navigation data can be generated by analyzing one VOBU data.

However, VOB_E_PTM and FWDI cannot be obtained until a VOB is determined. This is because, to obtain VOB_E_PTM and FWDI, at least information for specifying the position of a VOBU in the VOB and information for obtaining the playback end time information of the VOB is required as the VOBU attribute information. Therefore, VOB_E_PTM and FWDI are obtained by the system controller 105 while the VOB is stored in the recording buffer memory 102. In the recording apparatus according to the first embodiment, the number of packs in the VOBU as the information for specifying the position of the VOBU in the VOB is employed as the VOBU attribute information, and the playback start time information of the VOBU and the number of frames in the VOBU as the information for obtaining the playback end time information of the VOB are employed as the VOBU attribute information.

As described above, when part of the navigation data is obtained by the audio/video encoder 101, a provisional navigation pack is inserted at the top of the VOBU. In this case, the audio/video encoder 101 writes part of the generated navigation data in the provisional navigation pack. Then, the system controller 105 generates navigation data other than the navigation data that has been generated by the audio/video encoder 101, and form a complete navigation pack while the VOB data is stored in the recording buffer memory 102. Consequently, the amount of processing by the system controller 105 can be reduced.

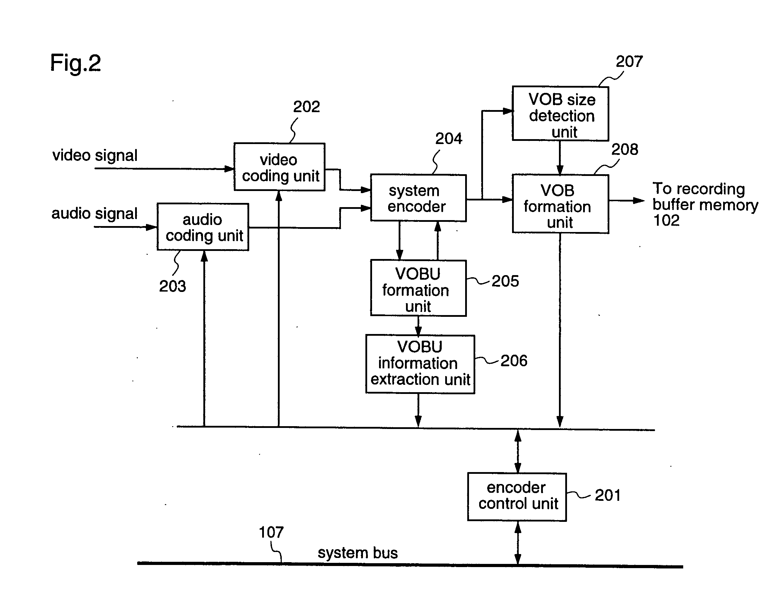

Next, the audio/video encoder 101 will be described in more detail with reference to figure 2. The audio/video encoder 101 shown in figure 2 comprises an encoder control unit 201 for performing control of respective constituents and control of communication with external means, a video coding unit 202, an audio coding unit 203, a system encoder 204, a VOBU formation unit 205, a VOBU information extraction unit 206, a VOB size detection unit 207 and a VOB formation unit 208, and outputs a compressed stream having a VOB configuration according to the DVD video specifications.

The video coding unit 202 compressively encodes an inputted video signal and outputs a video stream. Here, the description will be given of a case where video signals are compressively encoded by the MPEG coding method. Figure 6 is a diagram illustrating an example of a GOP configuration of a video signal which has been compressively encoded by the MPEG coding method and the coding type of each frame. The audio coding unit 203 encodes an inputted audio signal and outputs an audio stream. The audio coding unit 203 can compressively encode audio signals according to the Dolby AC3 coding method, the MPEG audio coding method or the like, and output coded data. Or alternatively, the audio coding unit 203 can encode audio signals according to a non-compressive coding method such as linear PCM, and outputs coded data.

The system encoder 204 multiplexes the video stream and the audio stream. Here, the system encoder 204 packets and packs the video stream and audio stream in compliance with the MPEG system coding method, thereby creating video packs and audio packs, and further multiplexes the video packs and the audio packs in compliance with the MPEG system coding method. The system encoder 204 performs the packing by carrying out a pudding process for the video stream and the audio stream so that the VOBU data sizes become integral multiples of 2048 bytes.

Next, the VOBU formation unit 205 divides the multiplexed stream into VOBUs. As can be seen in figure 4(g) showing the relationship between the video packs as constituents of each VOBU and GOPs, one VOBU is constituted by video data of one or more GOPs. Further, the VOBU is formed so that the playback time of the video data included in the VOBU is 0.4 sec∼1.0 sec.

The relationship between the audio packs included in the multiplexed stream which are divided into VOBUs on the basis of GOP data of video, and coded data of audio frames is the same as that shown in figure 4(h).

The VOBU information extraction unit 206 detects attribute information of each VOBU formed by the VOBU formation unit 205. The detected VOBU attribute information is posted to the system controller 105 via the encoder control unit 201 and the system bus 107. The VOBU attribute information is the same as that described above.

Here, it is possible that the VOBU formation unit 205 generates a provisional navigation pack and the system encoder 204 inserts the provisional navigation pack. This is because PCI data and DSI data of the navigation pack cannot be obtained until the configuration of a VOB is determined, while predetermined fixed navigation data can be easily generated by the audio/video encoder 101. Further, as described above, it is also possible to store past VOBU attribute information, generate navigation data which can be obtained from the stored VOBU attribute information, and insert the generated navigation data in a provisional navigation pack.

The VOB size detection unit 207 cumulatively adds the data sizes of a group of VOBUs constituting a VOB, thereby detecting the data size of the VOB. The VOB formation unit 208 forms a VOB from the VOBU group. When detecting that the data size of the VOB that is being formed has exceeded a predetermined threshold M, the VOB formation unit 208 decides the last VOBU in the VOB and closes the VOB. Then, the VOB formation unit 208 starts to form a new VOB from a VOBU following the last VOBU. When the VOB formation unit 208 completes outputting of the last VOBU to the recording buffer memory 102, a last VOBU notice is sent to the system controller 105. The last VOBU notice to the system controller 105 is sent by the encoder control unit 210 via the system bus 107.

Here, it is desirable that the VOB formation unit 208 decides a VOBU at a time when the data size of the VOBU that is being formed has exceeded the predetermined threshold M to be the last VOBU, but a little delay may occur after it detects that the data size has exceeded the threshold M until the last VOBU is decided. This delay depends on the memory size of the recording buffer memory 102. The method for deciding the memory size of the recording buffer memory 102 will be described later.

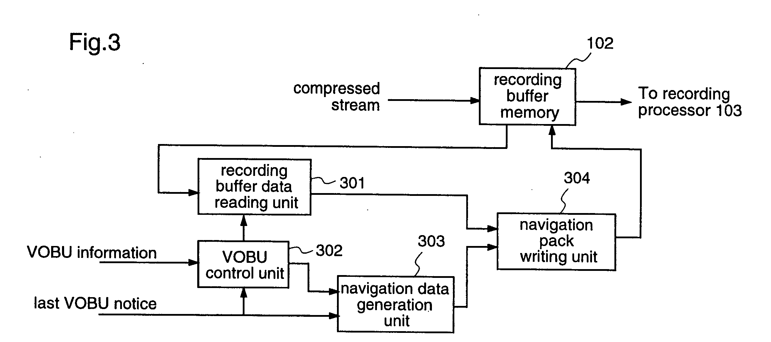

Next, the system controller 105 of the recording apparatus according to the first embodiment will be described in more detail with reference to figure 3. Figure 3 is a block diagram illustrating a structure of the system controller 105. With reference to figure 3, the operation of the system controller 105 concerning the process for inserting the navigation pack will be described. As shown in figure 3, the system controller 105 comprises a recording buffer data reading unit 301, a VOBU control unit 302, a navigation data generation unit 303, and a navigation pack writing unit 304.

The VOBU control unit 302 stores the VOBU attribution information posted by the audio/video encoder 101. The VOBU attribute information of at least one VOB is stored. The last VOBU in the VOB can be recognized by the last VOBU notice posted by the audio/video encoder 101. Upon receipt of the last VOBU notice, the navigation data generation unit 303 generates navigation data from the VOBU attribute information belonging to the VOB. The method for generating the navigation data using the VOBU attribute information is the same as that described above. For example, VOBU_EA and NV_PCK_LBN are obtained from the VOBU size (vobu_es) of the VOBU attribute information.

The recording buffer data reading unit 301 obtains the address of the top pack of a VOBU in the recording buffer memory 102 on the basis of the number of packs of each VOBU included in the VOBU attribute information. Since the data size of each pack is 2048 bytes, the address of the top pack of the VOBU can be obtained when the address at the start of recording is taken as an offset address.

The navigation pack writing unit 304 forms a navigation pack from the navigation data, and inserts the formed navigation pack in a position at the address of the top pack of the VOBU in the recording buffer memory 102. Here, when a provisional navigation pack has been inserted by the audio/video encoder 101, only navigation data generated by the navigation data generation unit 303 is written in a predetermined position in the provisional navigation pack.

Here, according to the DVD video specifications, as shown in figure 4(a), it is necessary to record also the VMG 40a such as management information of each VTS. This VMG 40a is generated by the system controller 105 using the VOBU attribute information posted by the audio/video encoder 101 and the like, and recorded in a predetermined position on the recording medium 106.

As described above, according to this first embodiment, the delay depending on the memory size of the recording buffer memory 102 occurs, while a compressed stream into which the navigation pack has been inserted can be recorded on a recording medium in real time. Therefore, data of the recording format that is compliant with the DVD video specifications as a recording format that facilitates high-speed data search can be recorded on a recording medium in real time.

Here, in the recording apparatus of the present invention, the audio/video encoder 101 may compressively encode video signals by the variable-rate controlled compressive coding method. According to the variable-rate controlled compressive coding method, the size of each VOBU (the number of packs) is varied depending on input signals, while in the recording apparatus of the present invention, the audio/video encoder 101 posts the number of packs of each VOBU to the system controller 105. Therefore, even when the video signals are compressively coded by the variable-rate controlled compressive coding method, the system controller 105 can generate the navigation pack. According to the variable-rate controlled compressive coding method, the video signal is compressively coded at a bit rate depending on the degree of difficulty in coding of the inputted video signal, whereby even when the average rate is reduced to a lower level, video of high picture quality can be obtained. Therefore, video signals of high picture quality can be recorded on a recording medium having a limited recording capacity.

Similarly, audio signals can be compressively coded by the variable-rate compressive coding method. In this case, audio signal of high sound quality can be recorded. When audio signals are coded by the variable-rate compressive coding method, the audio/video encoder 101 detects the degree of difficulty in coding of an inputted signal in a prescribed period, decides the amount of bits to be assigned according to the degree of difficulty in coding, and encodes the inputted signal according to the obtained amount of bits.

Further, in this recording apparatus of the present invention, it is also possible that the system controller 105 defines the maximum value of the number of VOBs constituting one VTS as a predetermined value N and posts this predetermined value N to audio/video encoder 101. When the maximum number of VOBs is limited to decide an upper limit of the VOB management table, the memory size for the VOB management table is limited as well as the VOB management is easily performed.

According to the DVD video specifications, the maximum number of cells in one VTS is limited to 255. Since a VOB is constituted by at least one cell, consequently the maximum number of VOBs is limited to 255. Therefore, according to the DVD video specifications, it is decided that the predetermined value N = 255, and the recording of one VTS is stopped at a time when the number of VOBs reaches the maximum number N. Accordingly, the recording can be performed without exceeding the predetermined maximum number of VOBs. Further, since the DVD video specifications define the maximum number of VOBs as 255, it is also possible that the audio/video encoder 101 defines the predetermined value N as 255.

In order to stop recording at a time when the number of VOBs reaches the maximum number, it is required to monitor the number of VOBs. This monitoring of the number of VOBs is carried out by the system controller 105 by counting the last VOBU notice. The system controller 105 posts a recording stop command to the respective constituents when the number of VOBs reaches the maximum value, and then the recording apparatus stops the VTS recording. Here, when the audio/video encoder 101 defines the predetermined value N, the audio/video encoder 101 may monitor the number of VOBs.

It is also possible that the recording of one VTS is finished at a time when the number of VOBs reaches the maximum value, and thereafter recording of a new VTS is continuously carried out. That is, it is possible to divide the VTS to be recorded. By doing so, the VTSs can be recorded without interrupting the recording and exceeding the maximum number of VOBs. Here, the division of the VTS is carried out by the system controller 105.

In this recording apparatus of the present invention, the memory size B of the recording buffer memory 102 can be defined on the basis of the recording capacity of the recording medium 106 and the maximum number N of VOBs included in the VTS. For example, assuming that the memory size of the recording buffer memory 102 is b, since it is necessary to store at least one VOB in the recording buffer memory 102, the maximum data size of the VOB becomes b.

Therefore, assuming that the maximum number of VOBs in the VTS is N, the maximum data size V of one VTS is:

$$V = N \times b \qquad (1)$$

Here, assuming that the recording capacity of the recording medium 106 is C, when

$$C > V \qquad (2),$$

since the data size of one VTS recorded on the recording medium does not reach the recording capacity of the recording medium, only part of the recording capacity of the recording medium 106 is used, whereby the recording capacity cannot be utilized effectively. Therefore, it is difficult to record audio/video data of high audio/picture quality.

On the other hand, when the memory size of the recording buffer memory 102 is sufficiently increased, the recording capacity of the recording medium 106 can be utilized effectively, while the costs of the recording apparatus are adversely increased. Thus, the memory size B of the recording buffer memory 102 is calculated using the recording capacity C of the recording medium 106 and the maximum number of VOBs N, as follows:

$$B = C/N \qquad (3)$$

The memory size of the recording buffer memory 102, calculated as described above, is the minimum memory size that is required to record one VTS using all of the recording capacity. When the memory size is decided as described above, the recording capacity of the recording medium can be utilized without loss, whereby the audio/video data of high audio/picture quality can be recorded. Further, when the memory size of the recording buffer memory 102 is minimized, the cost of the recording apparatus can be reduced.

Here, the memory size obtained by Formula (3) is the minimum required amount. The memory size of the recording buffer memory 102 can be decided so as to have a margin m. That is, the memory size B is decided as follows:

$$B = C/N + m \qquad (4)$$

The margin m is obtained with taking variations in the VOB data size into consideration. This is because it is necessary to store at least one VOB in the recording buffer memory 102.

Though the end of a VOB is decided at a time when the VOB data size has exceeded the predetermined threshold M as described above, the VOB size has variations because the VOB size is detected in VOBU units. The maximum variation is decided by the possible maximum data size of one VOBU. For example, assuming that the maximum rate of the recording data rate is Rt and the maximum time of a VOBU is T, the maximum size of the VOBU is (Rt x T) and the maximum variation is (RT x T). Here, in the DVD video specifications, Rt = 10.08 Mbps and T = 1.0 sec.

Further, a delay time may occur after it is detected that the VOB size has exceeded the threshold M until the last VOBU is decided. The amount of data occurring during the delay time may be a cause of the variations in the VOB size. Assuming that this delay time is d, the maximum size of occurring data is obtained using the maximum recording data rate Rt by Formula (Rt x d). Therefore, the margin m is obtained by

$$m = Rt \times (T+d) \qquad (5)$$

From the foregoing, the memory size B of the recording buffer memory 102 is obtained by

$$B = C/N + Rt \times (T+d) \qquad (6)$$

Here, the memory size of the recording buffer memory 102 obtained as described above is defined as the minimum value, and it may be larger.

In this recording apparatus of the present invention, while the recording of VTSs on the recording medium 106 is started after the navigation pack is inserted in a VOB that is stored in the recording buffer memory 102, the compressed stream is outputted continuously from the audio/video encoder 101 to the recording buffer memory 102 also in the recording process. Therefore, it is required to store a VOB that is being recorded while storing newly formed VOBs. Accordingly, the memory size is required to have such a margin that VOB data of a time period that is required for the recording process can be stored.

Further, the time that is required to insert the navigation pack should also be considered, but this navigation pack insertion time can be considered as part of the recording time.

In this recording apparatus of the present invention, the memory size of the recording buffer memory 102 may be decided by the recording data size of the VTS. The recording data size of the VTS is obtained on the basis of the recording rate and the recording time. As described above, assuming for example that the memory size of the recording buffer memory 102 is b and the maximum number of VOBs in a VTS is N, the maximum recordable data size V of one VTS is obtained by V = N x b as shown by Formula (1). When the size of data that is to be recorded is larger than the maximum recordable data size V, the data cannot be recorded.

On the other hand, when the memory size of the recording buffer memory 102 is sufficiently increased, the maximum recordable data size V is increased, but the cost of the recording apparatus is adversely increased. Thus, the memory size B of the recording buffer memory 102 is calculated using the recording data size D and the maximum number of VOBs N, as follows:

$$B = D/N \qquad (7)$$

The memory size of the recording buffer memory 102, calculated as described above, is the minimum required memory size that enables recording of the data size D. Therefore, the minimum memory size can be decided as well as the cost of the recording apparatus can be reduced. Here, the memory size obtained by Formula (7) is the minimum required amount, and thus the memory size of the recording buffer memory 102 may be decided so as to include the margin m. To be more specific, the memory size B can be obtained as follows:

$$B = D/N + m \qquad (8)$$

The margin m can be obtained in the same way as described above.

In the recording apparatus of the present invention, the threshold M for the VOB division defined by the system controller 105 may be decided on the basis of the maximum number of VOBs in the VTS and the recording capacity of the recording medium 106. The generated VOB size is almost equal to the threshold M. Therefore, assuming that the maximum number of VOBs in one VTS is N, the maximum data size of the VTS is (M x N). Thus, assuming the recording capacity of the recording medium 106 is C, the threshold M is obtained by

$$M = C/N \qquad (9)$$

The threshold M calculated as described above is a minimum value that is required to record one VTS by using all of the recording capacity. When the threshold M is smaller than C/N, the maximum data size of one VTS is smaller than the recording capacity of the recording medium 106, so that part of the recording capacity is left unused, whereby the recording medium 106 cannot be used effectively. On the other hand, when the threshold M is sufficiently larger than C/N, the recording capacity of the recording medium 106 can be used effectively, but the VOB size is increased, whereby it is required to increase the memory size of the recording buffer memory 102, resulting in an increase in the cost of the recording apparatus. Therefore, when the threshold M is obtained by M = C/N, the efficiency becomes the highest.

Alternatively, the threshold M may be decided on the basis of the recording data size of the VTS. The recording data size of the VTS is obtained by the recording rate and the recording time. Assuming that the maximum number of VOBs in one VTS is N and the recording data size is D, the threshold M is obtained by

$$M = D/N \qquad (10)$$

The threshold M which is calculated as described above is the minimum value required to record data of the data size D. When the threshold M is smaller than D/N, the recordable data size becomes smaller than the recording data size D, whereby the data cannot be recorded. On the other hand, when the threshold M is sufficiently larger than D/N, the recordable data size can be increased, but the VOB size is increased, so that the memory size of the recording buffer memory 102 is required to be increased, whereby the cost of the recording apparatus is increased. Therefore, when the threshold M is obtained by M = D/N, the efficiency becomes highest.

It is also possible to define the threshold M on the basis of the memory size of the recording buffer memory 102. Since at least one VOB is stored in the recording buffer memory 102, the threshold M is decided so that the memory of the recording buffer memory 102 does not overflow. Alternatively, it is possible that the threshold M is decided and thereafter the memory size of the recording buffer memory 102 is decided according to the threshold M.

Further, in this recording apparatus of the present invention, when a recording stop command is issued by the user or the like at an arbitrary time, the audio/video encoder 101 notifies the system controller 105 of a VOBU that is being formed as the last VOBU in a VOB, and then the system controller 105 receives the notice and controls the respective constituents, thereby completing the recording of the VOB and finishing the recording of the VTS. In this case, there are some cases where the VOB size is sufficiently smaller than the threshold M for the VOB division, but since the notice of the attribute information of each VOBU and the last VOBU notice are given to the system controller 105, the system controller 105 can generate the navigation data regardless of the data size of the VOB. By the above-mentioned operation, the VTS can be recorded in real time in a recording format that is compliant with the DVD video specifications, while recording can be stopped at an arbitrary time.

The DVD video specifications define that the video playback time of the last VOBU in a VOB is 0.4 sec - 1.2 sec. Therefore, for example when a video signal to be coded is a video signal according to the NTSC system, one VOBU requires at least 12 frames. In this case, in the recording apparatus of the present invention, when the number of frames in the last VOBU does not reach 12 frames at a time when the recording stop command is posted, the coding process is continued so that the number of frames in the last VOBU becomes at least 12 frames, then the coding process is stopped, and the recording process is stopped at a time when the recording of the last VOBU is completed.

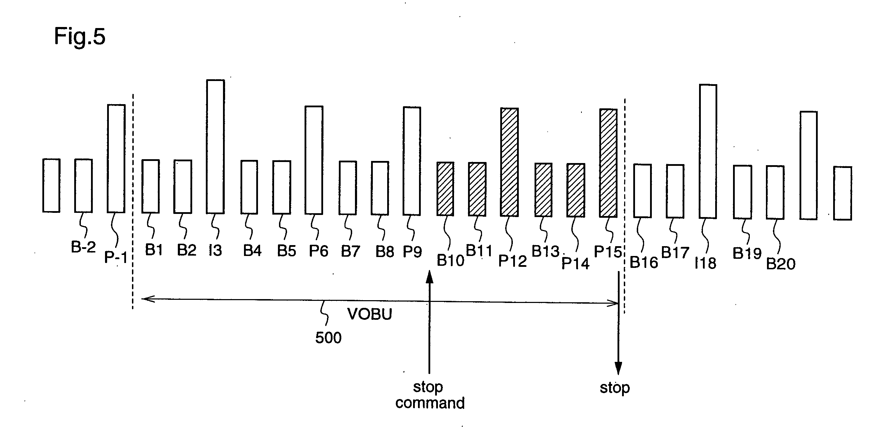

Stop timing of the coding process will be described with reference to figure 5. Figure 5 is a diagram showing time flows of video frames. In figure 5, I3 and I18 are I frames, and P-1, P6, P9, P12 and P15 are P frames. B-2, B1, B2, B4, B5, B7, B8, B10, B11, B13, B14, B16, B17, B19 and B20 are B frames. Here, B1 frame is the top frame in a VOBU 500.

It is assumed that a recording stop command is posted immediately before B10 frame. When the recording is stopped in accordance with the recording stop command with taking B10 frame as the last frame, the number of frames in the last VOBU 500 is 10 frames and the playback time does not reach 0.4 sec. Thus, as shown in figure 5, the recording is stopped for example with taking P15 frame as the last frame. Accordingly, the number of frames in the last VOBU 500 becomes 15 frames, whereby the playback time exceeds the minimum playback time of the VOBU according to the DVD video specifications, i.e., 0.4 sec. Here, the recording is stopped at a time when the VOBU reaches 15 frames, while the recording stop timing can be any time as long as the playback time of the last VOBU is 0.4 sec ~ 1.2 sec.

In the first embodiment, as an example of the recording format of the recording medium, the format that is compliant with the DVD video specifications has been described. However, this is only an example and the present invention is not limited to this format. For example, DVD video recording specifications (Vers. 1.0) was issued in September 1999, predicted upon that audio/video signals are recorded on a DVD in real time. Since the DVD video recording specifications are predicted upon the real-time recording, when basically only past information is employed, audio/video signals can be recorded in a recording format that is compliant with the DVD video recording specifications. According to the specifications, it is unnecessary to insert a navigation pack at the head of a VOBU like the DVD video specifications, and thus the above-mentioned operation of temporarily storing VOB data and then recording the data is not required. That is, the memory size of the recording buffer memory 102 can be limited to a size that is smaller than that at the recording according to the DVD video specification. In the DVD video recording specifications and the DVD video specifications, audio/video signals are recorded on different types of recording media, respectively. A recording medium that is compliant with the DVD video recording specifications is for example a DVD-RAM. A recording medium that is compliant with the DVD video specifications is for example a DVD-R.

An operation of the recording apparatus according to the present invention, in a case where audio/video signals are recorded on a recording medium, switching between a recording format that is compliant with the DVD video specifications and a recording format that is compliant with the DVD video recording specifications, will be described hereinafter. Initially, the type of the recording medium is decided by the decision unit 110. For example when the decision unit 110 decides that the recording medium 106 is a DVD-R, the system controller 105 inserts a navigation pack at the head of a VOBU as described above. On the other hand, for example when the decision unit 110 decides that the recording medium 106 is a DVD-RAM, the recording processor 103 records a VTS in which no navigation pack has been inserted on the recording medium 106 and, after the recording of the VTS is finished, further records navigation data generated by the system controller 105 in a VOBU management area on the recording medium 106. The recording processor 103 carries out the above-mentioned respective recording processes under control of the system controller 105.

As described above, the recording apparatus of the present invention includes the decision unit 110 for deciding the type of a recording medium, and the system controller 105 selects one of inserting a navigation pack at the head of a VOBU on the basis of the decision result of the decision unit 101 and controlling the recording processor 103 for recording navigation data in a VOBU management area on the recording medium 106. Therefore, audio/video signals can be recorded on a recording medium conforming to a recording format that is compliant with the DVD video recording specifications or to a recording format that is compliant with the DVD video specifications.

Further, in the foregoing descriptions, as examples of the recording format of a recording medium, the recording format that is compliant with the DVD video specifications and the recording format that is compliant with the DVD video recording specifications have been described. However, the present invention is not limited to these recording formats, and any recording format can be employed as long as the data structure has a configuration of VOBUs and VOBs and information such as playback control information or search control information is placed in a predetermined position in each VOBU.

In the first embodiment, the operation in the case where audio/video signals are recorded on a recording medium has been described, but the audio/video signals may be recorded in a recording/playback apparatus.

Further, in the first embodiment, the operation in the case where audio/video signals are recorded on a recording medium has been described, but the present invention is not limited to this case and the audio/video signals may be played back while being recorded on a recording medium (simultaneous recording and playback) when the recording rate of the recording medium and the playback rate of the recording medium are sufficiently higher than the data rate. In the case of simultaneous recording and playback, not only the recording buffer memory but also a playback buffer memory is required. However, when audio/video signals are recorded in the recording format that is compliant with the DVD video recording specifications as described above, since it is unnecessary to temporarily store VOB data in a recording buffer memory, a memory space that is used for the recording process of the recording buffer memory can be reduced, and when a memory space that is not used for the recording process is allocated to the playback process, the recording buffer memory can be used as a playback buffer memory. Accordingly, the simultaneous recording and playback can be realized.

Further, in the first embodiment, audio/video signals are recorded. However, only audio signals or only video signals may be recorded, or signals other than the audio/video signals may be recorded. The MPEG coding method has been described as the compressive coding method for the video signals, but the video signals can be compressively coded by another compressive coding method. Examples of another compressive coding method are a wavelet coding method, a vector quantization coding method and the like.

Further, in the first embodiment, the VOB division is performed on the basis of the VOB data size. However, the VOB division may be performed on the basis of the compressive coding rate and the VOB playback time. This is because the VOB size can be obtained by multiplying the coding rate by the playback time. In this case, when the coding rate is lower, the playback time of a VOB is lengthened and when the coding rate is higher, the playback time of a VOB is shortened, and the VOB division timing is decided on the basis of the VOB playback time.

The recording medium may be any medium such as an optical disk and a magnetic disk. Further, the recording medium can be a rewritable recording medium, or may be a recording medium that is capable of only once recording.

In the first embodiment, the structure of the recording apparatus has been described with reference to the block diagrams of figures 1, 2 and 3, but the operations of the respective constituents of the recording apparatus may be realized by software. In this case, the respective constituents are realized by software of an arithmetic processor. The program is stored in a semiconductor memory, or a recording medium such as an optical disk and a magnetic disk.


**Claims**

1. A recording apparatus for recording a compressed stream that is obtained by compressively coding audio/video signals, on a recording medium, including:

    an encoder for compressively coding the audio/video signals and outputting a compressed stream;
    a recording buffer memory for storing the compressed stream;
    a recorder for recording the compressed stream stored in the recording buffer memory, on the recording medium; and
    a system controller for controlling the respective units,
    said encoder dividing a compressed stream of audio/video signals within a predetermined time range to form plural sub-units and forming a main unit from a group of these sub-units to output the compressed stream as well as creating sub-unit attribute information concerning the sub-units, and
    said system controller generating management information for each of the sub-units from the corresponding sub-unit attribute information, and inserting the management information in a predetermined position in the main unit, and said recorder reading the compressed stream successively from the recording buffer memory when the sub-unit management information has been inserted into the main unit, and recording the read stream on the recording medium.

2. The recording apparatus of Claim 1 wherein the encoder compressively encodes the audio/video signals by a variable-rate controlled compression method.

3. The recording apparatus of Claim 1 wherein the maximum number of the main units constituting the compressed stream is defined as a predetermined value N.

4. The recording apparatus of Claim 3 wherein when the number of the main units constituting the compressed stream reaches the predetermined value N, the recording of the compressed stream is stopped.

5. The recording apparatus of Claim 1 wherein the system controller forms a main unit set from a group of the plural main units, and when the maximum value of the main units included in the main unit set is defined as a predetermined value n and the number of the main units constituting the compressed stream reaches the predetermined value n, the main unit set is formed from a group comprising the predetermined value n of the main units, then followed by starting formation of a next main unit set.

6. The recording apparatus of Claim 3 wherein a memory size of the recording buffer memory is defined by a recording capacity of the recording medium and the predetermined value N.

7. The recording apparatus of Claim 3 wherein a memory size of the recording buffer memory is defined by a size of data to be recorded and the predetermined value N.

8. The recording apparatus of Claim 1 wherein the encoder forms the main unit from the sub-unit group when a total data size of the sub-unit group becomes equal to or larger than a predetermined value M.

9. The recording apparatus of Claim 8 wherein the predetermined value M is defined by a memory size of the recording buffer memory.

10. The recording apparatus of Claim 8 wherein the maximum number of the main units constituting the compressed stream is set at a predetermined value N, and

the predetermined value M is defined by a recording capacity of the recording medium and the predetermined value N.

**11.** The recording apparatus of Claim 8 wherein

the maximum number of the main units constituting the compressed stream is set at a predetermined value N, and

the predetermined value M is defined by a size of data to be recorded and the predetermined value N.

**12.** The recording apparatus of Claim 1 wherein

the encoder detects at least one information among information concerning a data size of the sub-unit, information concerning a position of the sub-unit in the main unit, and information concerning a playback time of the sub-unit, as the sub-unit attribute information.

**13.** The recording apparatus of Claim 1 wherein

the system controller inserts the sub-unit management information into the main unit so as to be placed at a head of each sub-unit.

**14.** The recording apparatus of Claim 1 comprising:

a unit for issuing a recording stop command or a recording start command,

said system controller posting a coding stop instruction to the encoder when the recording stop command is issued, and

said encoder finishing forming the main unit when receiving the coding stop instruction, taking a sub-unit that is being formed at a time when the instruction is received as a last sub-unit.

**15.** The recording apparatus of Claim 1 comprising:

a decision unit for deciding the type of the recording medium, and

said system controller selecting either inserting the sub-unit management information in a predetermined position in the main unit on the basis of a result of the decision by the decision unit, or controlling the recorder for recording the sub-unit management information in a sub-unit management area on the recording medium.

**16.** A recording method by which a compressed stream that is obtained by compressively coding audio/video signals is recorded on a recording medium, comprising:

a coding step of compressively coding the audio/video signals, thereby generating a compressed stream;

a storage step of storing the compressed stream;

a recording step of recording the compressed stream stored in the storage step on the recording medium; and

a system control step of controlling the respective steps, wherein

in the coding step, a compressed stream of audio/video signals within a predetermined time range is divided to form plural sub-units, and a main unit is formed from a group of the sub-units as well as sub-unit attribute information concerning the sub-unit is created,

in the system control step, management information of each of the sub-units is generated from the corresponding sub-unit attribute information, and each of the management information is inserted in a predetermined position in the main unit, and

in the recording step, the compressed stream in which the sub-unit management has been inserted is successively recorded on the recording medium.

EP 1 239 476 A2

## Fig.1

audio/video
signal →

audio/video
encoder — 101

recording
buffer
memory — 102

recording
processor — 103

recording
head — 104

recording
medium — 106

playback
head — 109

107

user
interface
unit — 108

system
controller — 105

decision
unit — 110

## Fig.2

video signal → **video coding unit** (202)

audio signal → **audio coding unit** (203)

**system encoder** (204)

**VOB size detection unit** (207)

**VOB formation unit** (208) → To recording buffer memory 102

**VOBU formation unit** (205)

**VOBU information extraction unit** (206)

**encoder control unit** (201)

107 — system bus

EP 1 239 476 A2

Fig.3

compressed stream

To recording processor 103

recording buffer memory — 102

recording buffer data reading unit — 301

VOBU control unit — 302

navigation data generation unit — 303

navigation pack writing unit — 304

VOBU information

last VOBU notice

**Fig.4 (a)**  data structure on disk

| VMG | VTS(1) | VTS(2) | VTS(3) | ⋯ |
|---|---|---|---|---|

40a    40a1    40a2    40a3

**Fig.4 (b)**  video title data structure

| VTSI | VOBS |
|---|---|

40b1    40b2

**Fig.4 (c)**  VOBS structure

| VOB(1) | VOB(2) | VOB(3) | ⋯ | VOB(n) |
|---|---|---|---|---|

40c1    40c2    40c3    40cn

**Fig.4 (d)**  VOB structure

| VOBU(1) | VOBU(2) | VOBU(3) | ⋯ | VOBU(m) |
|---|---|---|---|---|

40d1    40d2    40d3    40dm

**Fig.4 (e)**  VOBU structure

| NV_PCK | V_PCK | A_PCK | V_PCK | A_PCK | ⋯ |
|---|---|---|---|---|---|

40f    40g1    40h1    40g2    40h2

**Fig.4 (f)**  navigation pack structure

| Pack Header | System Header | PCI Packet | DSI Packet |
|---|---|---|---|

40f1    40f2    40f3    40f4

**Fig.4 (g)**  structure of Video pack group in one VOBU

| V_PCK | V_PCK | V_PCK | ⋯ | ⋯ | ⋯ | V_PCK |
|---|---|---|---|---|---|---|
| | | GOP1 | | | GOP2 | pudding |

40g1    40g2    40g3    40g4    40v1    40v2    40v3

**Fig.4 (h)**  structure of Audio pack group in one VOBU

| A_PCK | A_PCK | ⋯ | ⋯ | A_PCK |
|---|---|---|---|---|
| a_frame | a_frame | a_frame | ⋯ | ⋯ | a_frame |

40h1    40h2    40h3    40k1    40k2    40k3    40k4

compressed data of audio frame

EP 1 239 476 A2

Fig.5

EP 1 239 476 A2

B-2  P-1  B1  B2  I3  B4  B5  P6  B7  B8  P9  B10 B11  P12  B13  P14  P15  B16 B17  I18  B19 B20

VOBU

500

stop
command

stop

Fig.6

GOP

P    I    P    P    P    I

... B    B    P    B    B    I    B    B    P    B    B    P    B    B    P    B    B    I ...

F(k-5)   F(k-3)   F(k-2)   F(k)   F(k+2)   F(k+4)   F(k+6)   F(k+8)   F(k+10)   F(k+12)
    F(k-4)      F(k-1)   F(k+1)   F(k+3)   F(k+5)   F(k+7)   F(k+9)   F(k+11)

time flow

... | P frame | B frame | B frame | I frame | B frame | B frame | P frame | B frame | B frame | P frame | B frame | B frame | P frame | B frame | B frame | I frame | B frame | B frame | ...

D(k-3)   D(k-4)   D(k-2)   D(k+3)   D(k+2)   D(k+4)   D(k+9)   D(k+8)   D(k+10)
    D(k-5)      D(k)   D(k-1)   D(k+1)   D(k+6)   D(k+5)   D(k+7)   D(k+12)   D(k+11)

EP 1 239 476 A2